# EUROPÄISCHE PATENTSCHRIFT

(11) **EP 2 240 664 B1**
(45) Veröffentlichungstag und Bekanntmachung des Hinweises auf die Patenterteilung: **31.08.2011**
(21) Anmeldenummer: 09708404.0
(22) Anmeldetag: 05.02.2009
(51) Int. Cl.: E06C 7/18, F16B 45/02

(54) **SICHERUNGSEINRICHTUNG**
SECURING DEVICE
DISPOSITIF DE SECURITE

(30) Priorität: 06.02.2008 AT 1912008
(43) Veröffentlichungstag der Anmeldung: 20.10.2010
(73) Patentinhaber: Strasser, Philipp, 2371 Hinterbrühl (AT)
(72) Erfinder: Strasser, Philipp, 2371 Hinterbrühl (AT)
(74) Vertreter: Dilg, Haeusler, Schindelmann Patentanwaltsgesellschaft mbH
(86) Internationale Anmeldenummer: PCT/EP2009/051305
(87) Internationale Veröffentlichungsnummer: WO 2009/098249

(56) Entgegenhaltungen:
- WO-A-2008/049143
- DE-A1-102006 010 898
- US-A- 4 423 796

## Beschreibung

Die Erfindung betrifft eine Selbstsicherungseinrichtung mit einem an einem Sicherungsmittel einhängbaren Anschlagelement, das mittels eines Verbindungselements mit einer zu sichernden Person verbindbar ist

Eine Sicherungseinrichtung dieser Art kann ein Klettersteigset ersetzen. Klettersteigsets dienen der Sicherheit von Kletterern auf so genannten "gesicherten" Klettersteigen oder Hochseilgärten. Sie werden jedoch auch für ausgesetzte arbeiten an Hausfassaden, Dächern, Brücken, Masten, etc. sowie auch in der Schifffahrt, insbesondere bei Segelbooten, eingesetzt. Weiters kann die Erfindung auch zur Sicherung von Gegenständen, etwa gegen Ladendiebstahl, in der Raumfahrt oder zum gesicherten Gefangenentransfer eingesetzt werden. Zur besseren Veranschaulichung wird der Folge von Personensicherung gegen Absturz gesprochen, Sicherung von Seglern, bei denen nicht der Absturz sondern das Abtreiben im Wasser die Hauptgefahr darstellt, Gegenständen, bei denen unrechtmäßiges Entfernen vermieden werden soll und andere Anwendungsweisen, sind damit analog gemeint.

Ein Selbstsicherungsset weist in der Regel zwei Karabiner auf, die jeweils über ein als Seil oder als Band ausgebildetes Verbindungsstück mit der sich sichernden Person verbunden sind, z.B. an einem Sicherungsgurt, wie z.B. einem Hüftgurt. Besonders in Hochseilgärten werden beim Selbstsicherungsset auch Rollen (Einzel- oder Mehrfachrolle) statt eines Karabinerhakens bzw. Rollen mit Karabinerhakenverschluss verwendet. Selbstsicherungssets in Seilgärten bestehen in der Regel aus zwei oder drei Anschlagelementen, die Verbindungsstücke zur gesicherten Person können dabei verschieden lang sein. Die Anschlagelemente sind oftmals an den freien Enden eines Y- oder V-förmigen Seiles oder Bandes befestigt, welches mit einem Seil bzw. Band oder einem anderen geeigneten Verbindungsstück mittig mit einer Anhängevorrichtung zum Befestigen an einem Sicherungsgurt der sich sichernden Person versehen ist. Oftmals sind auch ein oder mehrere Falldämpfer in diese Verbindungen eingebaut, um einen Fall einer Person in die Sicherungseinrichtung zu entschärfen. Das Sicherungsset wird in der Regel vorne oder hinten am Sicherungsgurt angebracht.

Der Kletterer sollte beim Klettern immer mit zumindest einem Anschlagelement an einer vorinstallierten Sicherung (z.B. Stahlseil, anders Seil, Leitersprossen, Sicherungsring, Bügel, am Seil unlösbar angebrachte einzel- oder Doppelrolle, Sicherungsring) am Klettersteig oder im Hochseilgarten eingehängt sein. Das zweite Anschlagelement ist entweder ebenfalls eingehängt, oder es wird geöffnet, um ihn bei Umlenkungen oder Unterbrechungen der vorinstallierten Sicherung umzuhängen, d.h. in die Fortsetzung der vorinstallierten Sicherung eingehängt werden kann.

Hierbei ergibt sich folgende Problematik:

Bei der Benutzung von Klettersteigsets kommt es immer wieder zu Unfällen, die auf menschliches Versagen des Benutzers oder anderer beteiligter Personen, zurückzuführen sind. Besonders bei Kindern und ungeübten Benutzern kommt es, nicht zuletzt durch die Nervosität, die die Höhe auf Hochseilgärten und Klettersteigen mit sich bringt, immer wieder zu unsachgemäßer Handhabung, wie einem gleichzeitigen Aushängen beider Anschlagmittel. Auch kommt es immer wieder vor, dass Teilnehmer gegenseitig versehentlich alle Anschlagmittel aushängen oder dass sich Teilnehmer des Risikos nicht bewusst sind, und absichtlich beide (bzw. alle) Anschlagmittel gleichzeitig aushängen. Dies bedeutet eine ungesicherte Situation, die im schlimmsten Fall zu einem Absturz des Benutzers aus großer Höhe führen kann.

Gemäß dem Stand der Technik sind einzelne, gegen versehentliches Öffnen versperrbare Karabiner bekannt, u.a. aus der WO 2004/113745 A1, aus der eine Ausfürungsform bekannt ist, bei der ein Karabiner eine Blockervorrichtung aufweist, die zur Fernentriegelung durch eine Schnur in Freigabestellung bewegt werden kann. Gemäß der US 2,116,880 A kann eine Sperre des Karabiners durch einen Schlüsselstab gelöst werden. Weiters gibt die DE 79 19 515 U1 einen Sicherungshaken mit Fernöffnung bekannt, die über einen Bowdenzug aktiviert werden kann. Die US 4 528 728 A beschreibt unterschiedliche Blockiervorrichtungen für einzelne Karabinerhaken. Die DE 10 2005 009 946 B3 beschreibt ein Klettersteigset, welches ein Alarmsignal aussendet, wenn beide Karabinerhaken gleichzeitig vom Sicherungsseil entfernt werden. Die US 4,423,796 beschreibt ein Sicherungsset, bei dem die beiden Karabiner mit einem Bowdenzug verbunden sind, wobei sich immer nur einer vom Sicherungsmittel abnehmen lässt. Die DE 10 2006 010 898 beschreibt den gleichen Vorgang, wobei das Anschlagelement ein Sicherungsseil durch dessen Durchmesser als sicher identifiziert. In der unveröffentlichten AT 1771/2006 sind ebenfalls zwei miteinender kommunizierende Anschlagelemente beschrieben, wobei jeweils ein sicherer Einhängepunkt durch ein fix anzubringendes Identifikationselement identifiziert ist. Es wird dadurch schnelles Umrüsten von Hochseilgärten oder Klettersteigen und weiters Beeinflussung von Benutzungsrichtung, Verwendung von Leitersprossen, Sicherungsringen, und eine Sicherung von vertikalen Auf- bzw. Abstiegen ermöglicht.

Die Erfindung bezweckt die Vermeidung dieser Risiken und stellt sich die Aufgabe, eine Sicherungseinrichtung der eingangs beschriebenen Art zu schaffen, mit der es möglich ist, eine Aushängung aus dem Sicherungsmittel unterbinden, so dass die Gefahr eines Absturzes zuverlässig gar nicht auftreten kann, und zwar auch dann nicht, wenn des Kletterns bzw. des Sicherns völlig unkundige Personen, wie Kinder oder Menschen mit besonderen Ausgangslagen (z.B. geistige Behinderung) die Sicherungseinrichtung benutzen. Insbesondere soll die Selbstsicherungseinrichtung besonders einfach in der Handhabung, aber trotzdem auch einfach in der Herstellung sein und mit einem Minimum an Bauteilen ein Maximum an Sicherheit bieten.

Die der Erfindung zugrunde liegende Aufgabe wird durch eine Kombination folgender Merkmale gelöst:
- das Anschlagelement hat eine zur Aufnahme des Sicherungselements mittels einer Barriere verschließbare Ausnehmung,
- die Barriere ist mittels eines Entsperrelement unter Freigabe der Ausnehmung entriegelbar
- und mittels eines Versperrelements unter Schließen der Ausnehmung versperrbar,
- wobei das Entsperrelement und das Versperrelement getrennt voneinander direkt oder indirekt beim und/oder am Sicherungsmittel befestigt sind und
- das Entsperrelement zum im am Sicherungsmittel eingehängten Anschlagelement bewegbar sowie unter Freigabe der Ausnehmung an diesem befestigbar ist und das Anschlagelement mit dem an ihm befestigten Entsperrelement nur im am Sicherungsmittel eingehängten Zustand zum Versperrelement bewegbar ist,
- wobei mit dem Versperrvorgang die Befestigung des Entsperrelement am Anschlagelement lösbar ist.

Bei der bevorzugten Ausführungsform der Erfindung ist lediglich ein einziges Anschlagelement pro Person nötig. In seinem Normalzustand kann das Anschlagelement durch eine Blockiervorrichtung nicht von dem Sicherungsmittel (Stahlseil, anderes Seil, Kette, Leitersprosse, Sicherungsring, nicht vom Seil abnehmbare Rolle etc.) zerstörungsfrei abgenommen werden. Die Verwendung eines zweiten oder weiterer Anschlagmittel ist ebenso denkbar. Diese können erfindungsgemäß oder auch herkömmlich ausgelegt sein.

Erst durch das Anbringen eines Entsperrmittels kann das Anschlagmittel von dem Sicherungsmittel abgenommen werden. Das Entsperrmittel ist mittels eines Verbindungsstücks (z.B. Kette, Seil, Band) mit einem sichern Punkt (z.B. Mast oder Baum im Seilgarten, Bohrhaken im Fels am Klettersteig) verbunden, und ist nach dem Anbringen am Anschlagelement von diesen nicht mehr zerstörungsfrei lösbar. Der Entsperrschlüssel übernimmt somit durch seine Befestigung am Anschlagelement die Sicherungsfunktion.

Am nächsten sicheren Einhängepunkt (Sicherungsstahlseil, Sicherungsring, Kette etc.) ist ein Versperrelement vorinstalliert. Das Versperrelement ist so konstruiert, dass das Anschlagelement erst aktiviert werden kann, nachdem dieses am sicheren Einhängepunkt angebracht wurde. Durch das Aktivieren mittels des Versperrmittels wird das Anschlagelement versperrt und das Entsperrmittel wieder freigegeben, so dass sich die Person mit dem Anschlagelement entlang des Sicherungsmittels weiterbewegen kann.

Als Versperrmittel kann ein an der Sicherungsstelle befestigter Schlüssel dienen, es ist jedoch auch möglich, elektrisch, elektronisch, magnetisch oder induktiv wirkende Sicherungsmittel einzusetzen. Weiters ist denkbar, optisch wirkende Sicherungsmittel einzusetzen.

Vorzugsweise ist die Sicherungseinrichtung dadurch gekennzeichnet, dass das zum Anschlagelement bringbar Entsperrelement mit dem Sicherungsmittel direkt oder indirekt über ein flexibles Verbindungsstück verbunden ist, das mit einer vorbestimmten Last, vorzugsweise mit einer Last schwerer als die zu sichernde Person, belastbar ist.

Für besondere Einsätze sind zwei oder mehrere Anschlagelemente vorgesehen, wobei jedes Anschlagelement jeweils eine zur Aufnahme des Sicherungsmittels mittels einer Barriere verschließbare Ausnehmung aufweist und jede Barriere mittels eines Entsperrelements entriegelbar und mittels eines Versperrelements versperrbar ist.

Sind zwei oder mehrere Sicherungsmittel vorgesehen, sind die Sicherungsmittel jeweils mit mindestens einem Entsperrelement und mit mindestens einem Versperrelement ausgestattet.

Gemäß einer bevorzugten Ausführungsform ist das Anschlagelement im am Entsperrelement befestigten Zustand zu einem weiteren Entsperrelement verbringbar und dieses weitere Entsperrelement am Anschlagelement unter Freigabe des ersten Entsperrelements befestigbar.

Die Erfindung ist nachfolgend an einigen Ausführungsbeispielen näher erläutert, worin die
- Fig. 1a: bis Fig. 1h erläutern das der Erfindung zugrunde liegende Prinzip näher;
- Fig. 2a: bis Fig. 2p stellen das Prinzip der Erfindung mit zwei Anschlagelementen dar;
- Fig. 3: bis Fig. 6 stellen beispielhaft ein Anschlagelement in Ausführung eines Karabinerhakens und dessen Einzelteile dar;
- Fig. 7a: bis Fig. 7c stellen mögliche Ausführungen des Versperrschlüssels und das dazugehörige Verbindungsstück dar;
- Fig. 8a: bis Fig. 8c stellen das Versperrelement in Ausführung eines mechanischen Schlüssels, angebracht an einem Stahlseil dar;
- Fig. 9a: bis Fig. 9h stellen den mechanischen Ablauf beim Entsperren, Umhängen und Versperren eines Anschlagelements in Ausführung eines Karabinerhakens dar; und in den
- Fig. 10a: bis Fig. 18h sind weitere Varianten veranschaulicht.

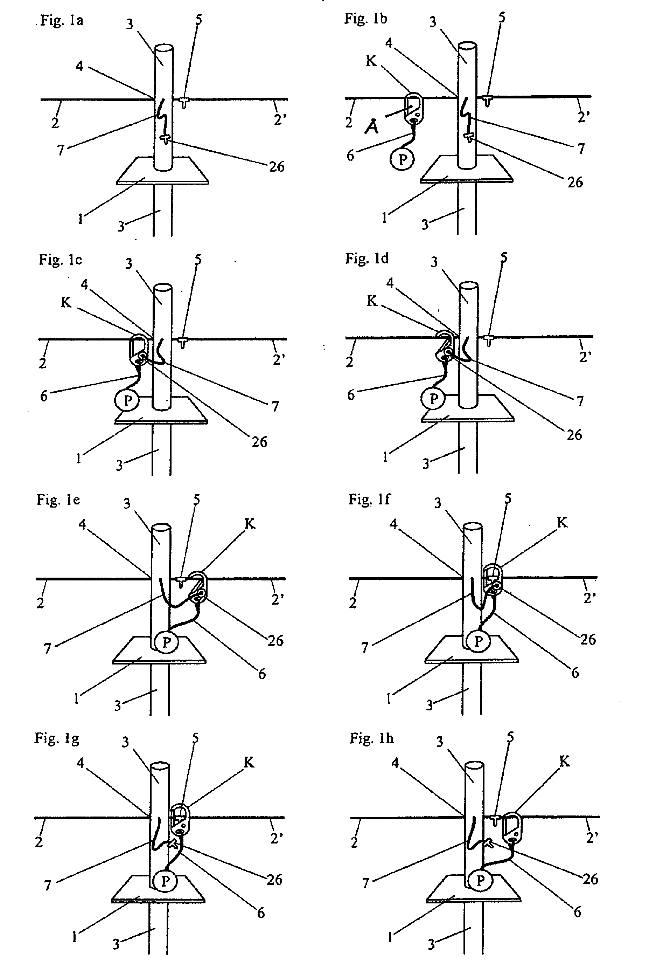

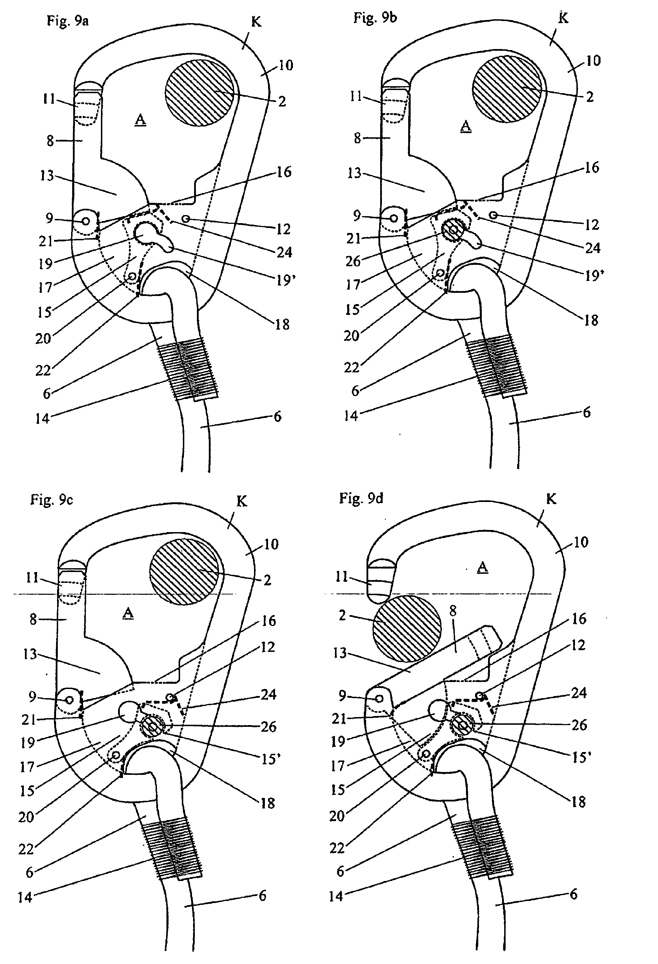

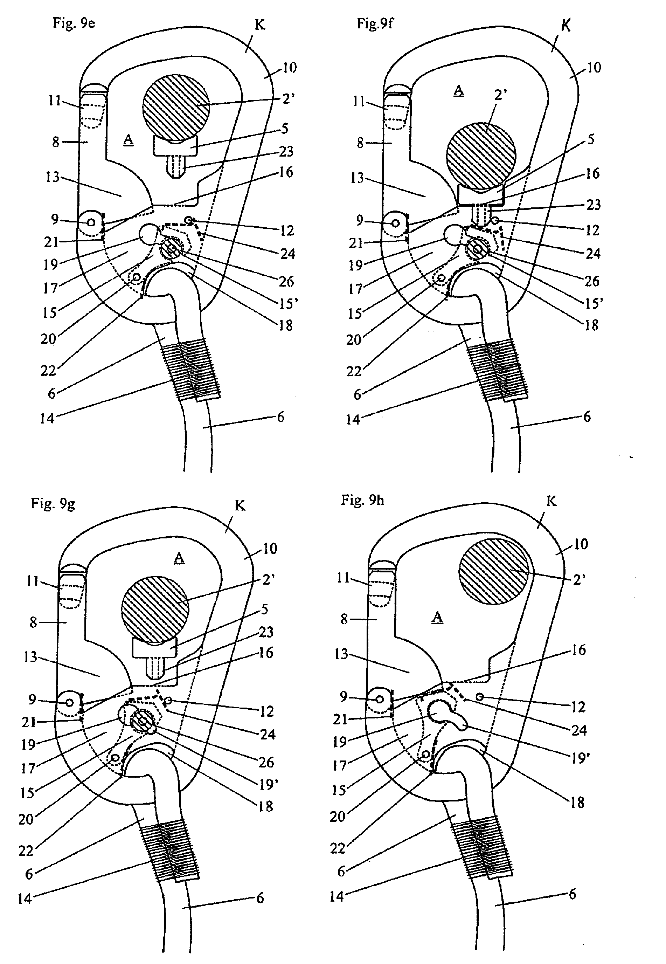

Zur detaillierten Erläuterung der Handhabung einer erfindungsgemäßen Selbstsicherungseinrichtung dient die nachfolgende Beschreibung, die sich auf Fig. 1a bis Fig. 1h und Fig. 9a bis Fig. 9h bezieht. In Fig. 1a bis Fig. 1h ist eine Plattform 1 eines Hochseilgartens gezeigt, wobei ein Sicherungsmittel 2, wie ein Stahlseil 2, von Mast 3 zu Mast 3 gespannt ist. Das Stahlseil 2 ist an jedem Mast 3 befestigt, beispielsweise mit einer Umwickelung, einen in den Mast 3 eingebohrten Ringhaken oder durch eine Durchführung (Durchbohrung) 4 durch den Mast und dient als Sicherungsstelle zum Absichern gegen einen Absturz einer Person P. Das Entsperrelement 26, nachfolgend auch Entsperrschlüssel genannt, ist an einem Verbindungsstück 7 mit einem sicheren Punkt, z.B. dem Mast 3 im Hochseilgarten, dem Stahlseil 2 oder einem Ringhaken 28 im Klettersteig befestigt. Das Verbindungsstück 7 kann z.B. die Ausprägungen eines Stahlseiles, anderen Seiles, einer Kette, eines Bandes haben, auch die Integration eines Fall dämpfenden Elements im Verbindungsstück 7 ist denkbar. Ein Versperrelement 5, nachfolgend auch Versperrschlüssel 5 genannt, ist ortsfest mit dem Sicherungsmittel, hier als abgehendes Stahlseil 2' dargestellt, verbunden. Als Sicherungsmittel kommen ebenso Sicherungsringe, Leitersprossen, Staples (U-Haken zum Einschlagen), Ringhaken oder nicht vom Seil abnehmbare Einzel- oder Mehrfachrollen in Frage.

In Fig. 1b ist ein Teilnehmer P dargestellt, der mit dem Anschlagelement K - wie einem Karabiner, welches im Stahlseil 2 eingehängt ist, durch ein Verbindungselement 6 gegen Absturz gesichert ist. Das Anschlagelement K ist in dieser Situation gegen Öffnen, also Freigeben seiner durch die Barriere 8, nachfolgend Gate 8 genannt, verschließbaren Ausnehmung A, mittels einer Blockervorrichtung 15 versperrt. Fig. 9a zeigt die Detailansicht einer vorzugsweisen Ausführungsform dieser Blockiervorrichtung 15. Diese Blockiervorrichtung wird durch eine Blattfeder 22 in einer Position gehalten, die das Öffnen des Gates 8 des Anschlagelements K durch dessen Ausleger 13 verhindert.

In Fig. 1c und Fig. 9b wird der Entsperrschlüssel 26 in die dafür vorgesehene Öffnung 19 des Anschlagelements K eingeführt. In Fig. 9c ist dargestellt, wie mittels des Entsperrschlüssels 26 die Blockiervorrichtung 15 in jene Position bewegt wird, die ein Öffnen des Gates 13 zulässt. Die Blattfeder 24 rastet in den Punkt 12, vorzugsweise ein vernieteter oder verschraubter Metallstift, ein, und verhindert dadurch, dass die Blockiervorrichtung 15 in die vorige Position zurückgeführt werden kann. Der Entsperrschlüssel 26 lässt sich nun nicht mehr aus der Öffnung 19 entfernen, da diese an diesem Punkt 19' einen geringeren Durchmesser aufweist. Ebenso ist denkbar, dass der Entsperrschlüssel 26 wie ein Fahrradschloss einrastet und nicht seitlich bewegt werden muss.

In Fig. 1d und Fig. 9d wird das Anschlagelement K durch das nun mögliche Öffnen des Gates 8 vom Stahlseil 2 genommen. Der Teilnehmer P ist zu diesem Zeitpunkt durch den fest mit dem Anschlagelement K verbundenen Entsperrschlüssel 26 gegen Absturz gesichert.

In Fig. 1e wird das Anschlagelement K im nächsten Sicherungsmittel, hier als Stahlseil 2' dargestellt, eingehängt. Das Verbindungsstück 7 muss in seiner Länge so dimensioniert sein, dass das Anschlagelement K sowohl zum ankommenden Sicherungsmittel 2 erreicht, als auch an dem abgehenden Sicherungsmittel 2' eingehängt werden kann. Weiters muss die Länge des Verbindungsstücks 7 gewährleisten, dass mit Anschlagelement K der Versperrschlüssel 5 erreicht werden kann. Ein Versperrschlüssel 5 muss an allen Einstiegen in die Sicherungsmittel 2, 2' (Stahlseil, Ring, Leitersprosse etc.) fix vorinstalliert sein.

Fig. 1f und Fig. 9f stellen das Einführen der schlüsselartigen Ausprägung 23 des Versperrschlüssels 5 in die dafür vorgesehene Öffnung 16 des Anschlagelements K dar. Dadurch wird die Blattfeder 24 aus ihrer blockierten Stellung gelöst und gibt, wie in Fig. 9g dargestellt, die Blockiervorrichtung 15 wieder frei. In Fig. 9h ist die Blockiervorrichtung 15 wieder in jene Position zurückgekehrt, in welche sie durch die Blattfeder 22 gedrängt wird. In dieser Position wird einerseits das Gate 8 durch dessen Ausleger 13 gegen Öffnen versperrt und andererseits der Entsperrschlüssel 26 freigegeben.

Der Teilnehmer P ist nun durch das versperrte Anschlagelement K am abgehenden Stahlseil 2' gegen Absturz gesichert und kann die nächste Etappe (z.B. Übung im Hochseilgarten oder Seilstück bis zum nächsten Umlenkpunkt im Klettersteig), begehen.

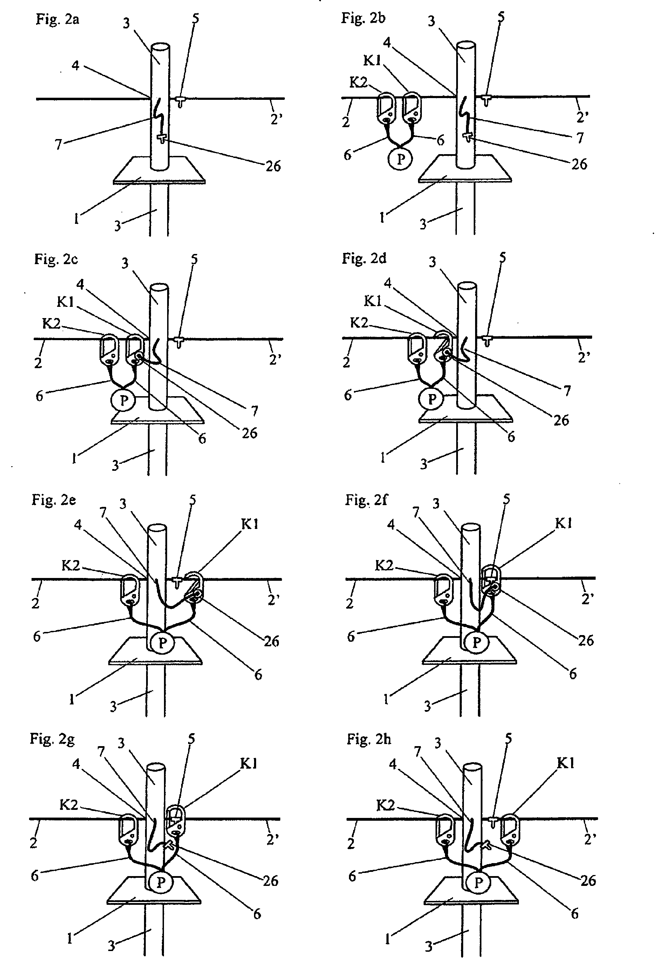

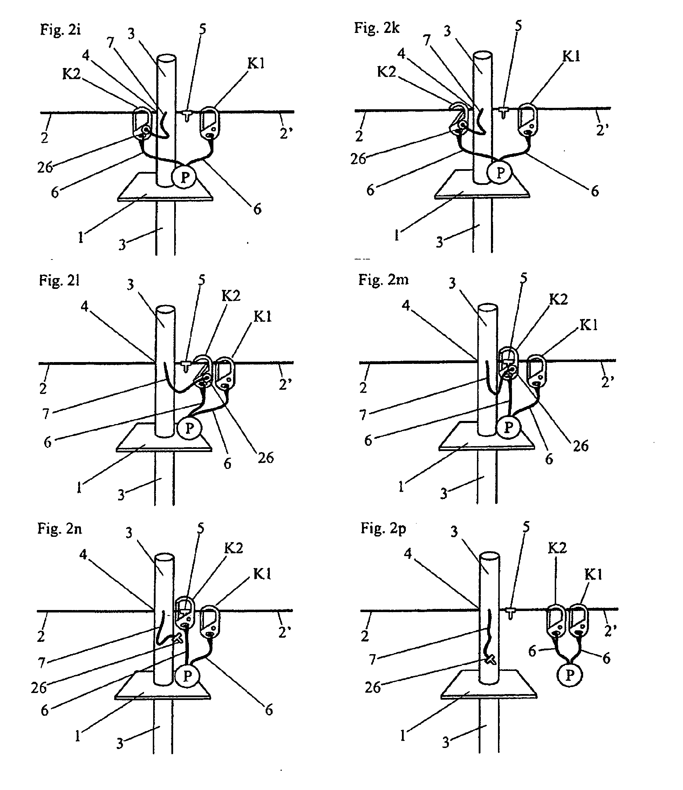

Die Fig. 2a bis Fig. 2p veranschaulichen den Umhängevorgang an einer Plattform 2 im Hochseilgarten mit zwei Anschlagelementen K1 und K2. Durch die Benutzung von zwei Anschlagelementen K1 und K2 ist die zu sichernde Person P immer durch zumindest ein Anschlagelement K1 und / oder K2 am Sicherungsseil 2 und/oder 2' gegen Absturz gesichert. Bei dieser Ausführungsform muss das Entsperrelement 26 und das dazugehörige Verbindungsstück 7 keine personensichernde Funktion ausfüllen und kann schwächer dimensioniert sein. In diesem Fall muss jedoch sichergestellt sein, dass immer nur höchstens ein Entsperrelement 26 in Reichweite eines der beiden Anschlagelemente K1 und K2 ist, damit nicht beide Anschlagelemente K1 und K2 gleichzeitig entsperrt werden können. Dies muss durch die Länge des Verbindungsstückes 7 gewährleistet werden.

Wird das Entsperrelement 26, das Verbindungsstück 7 und der Punkt 19' zum Anschlagelement K1 und K2 ausreichend dimensioniert und erreicht die zur Personensicherung vorgeschriebene Mindestbruchlast, so gewährleistet das erfindungsgemäße Sicherungssystem nicht nur kontinuierliche und sondern auch redundante Sicherung.

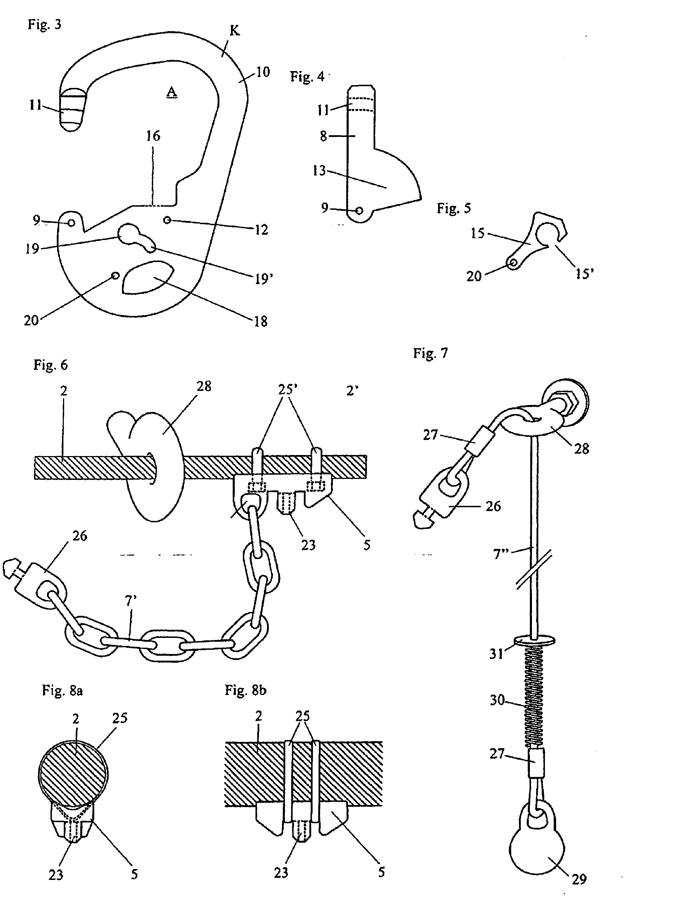

Fig. 3 stellt einen Körper 10 des Anschlagelements K in Ausführungsform eines Karabinerhakens dar. Eine Ausführung als Einzel- oder Mehrfachrolle ist ebenso denkbar. Ein Stahlstift 9, vorzugsweise vernietet, bildet die Achse des Gates 8. Das Gate 8 rastet in geschlossenem Zustand in eine Ausnehmung 11, die tangential zum Drehmittelpunkt 9 des Gates 8 ausgerichtet ist. 16 zeigt die Einfuhröffnung für den Versperrschlüssel 5 in Seitenansicht. Weiters sind der Stahlstift (vorzugsweise vernietet oder in Ausführungsform einer Schraube) 12 zum Einrasten der Blattfeder 24 der Blockiervorrichtung 15, der Stahlstift 20 (vorzugsweise vernietet oder in Ausführungsform einer Schraube), der den Drehmittelpunkt der Blockiervorrichtung 15 bildet, und ein Loch 18 im Anschlagelement K, durch welches das Ende des Verbindungselements 6 durchgeführt wird, dargestellt. Die Einfuhröffnung 19 für den Entsperrschlüssel 26 weist eine Ausnehmung 19' mit geringerem Durchmesser auf, um zu gewährleisten, dass sich der Entsperrschlüssel 26 nach dem Entsperren des Anschlagelements K nicht mehr zerstörungsfrei lösen lässt.

Fig. 4 stellt das Gate 8 des Anschlagelements dar. Der Stift 9, vorzugsweise in Ausführung eines vernieteten Stahlstifts oder eine Schraube, bildet den Drehmittelpunkt des Gates 8. In geschossenen Zustand rastet das Gate 8 mittels einer Ausnehmung 11 am Körper 10 des Anschlagelements K ein. Der Ausleger 13 des Gates 8 ermöglicht ein Blockieren des Gates 8 durch die Blockiervorrichtung 15.

Fig. 5 stellt die Blockiervorrichtung 15 dar. Ein Metallstift 20, vorzugsweise in Form eines vernieteten Stahlstifts oder einer Schraube bildet den Drehmittelpunkt der Blockiervorrichtung 5. Eine Ausnehmung 15' ermöglicht das passende Einführen der Entsperrschlüssels 26. Die Öffnung 15' in der Ausnehmung hat den Zweck, dass die Blockiervorrichtung 15 nicht, oder zumindest nur unverhältnismäßig schwierig, mit einem anderen Gegenstand, wie etwa einer Nadel, aus der blockierenden Position bewegt werden kann.

Fig. 6 stellt eine mögliche Ausführungsvariante einer Kombination des Entsperrschlüssels 26 und eines schlüsselartigen Elements 23 eines des Versperrschlüssels 5, zur Überbrückung einer Sicherungsseilbefestigung in Form eines Ringhakens 28, wie sie oftmals in Klettersteigen vorkommt, dar. Die Kombination beider Schlüssel 5 und 26 an einem Montagestück, die z.B. mittels Seilklemmen 25' am Sicherungsseil 2' befestigbar ist, macht besonders dadurch Sinn, dass sie schneller zu montieren ist und die Gefahr, dass während der Montage einzelne Teile verloren gehen, dadurch minimiert werden kann. Diese Variante eignet sich auch besonders zur temporären Montage in Klettersteigen. Es ist denkbar, dass zunächst eine ausgebildete Person (z.B. Bergführer) vorangeht, die erfindungsgemäße Umsicherungsstelle montiert, sodass in der Folge mehrere des Sicherns unkundige Personen (z.B. Kinder einer Schulklasse) kontinuierlich Sicher die Umhängung bewältigen und in der Folge ein weiterer Bergführer die erfindungsgemäße Umsicherungsstelle wieder abmontiert.

Fig. 7 stellt das Verbindungsstück 7 mit dem Entsperrschlüssel 26 dar. Die Ausführung gewährleistet, dass der Entsperrschlüssel 26 immer wieder an eine leicht aufzufindende und in eine für die Person P leicht greifbare Position zurückkehrt. Ermöglicht wird dies, indem das Verbindungsstück 7 als flexibles Seil 7" ausgeführt ist, welches durch einen Ringhaken 28 geführt ist. Der Ringhaken 28 muss dazu an einem sicheren Punkt, wie etwa einem Mast 3 im Hochseilgarten fix montiert sein. An einem Ende des Seils 7" ist der Entsperrschlüssel 26 unlösbar angebracht, hier durch eine Verpressung 27 dargestellt, am anderen Ende des Seils 7" ist ein Gewicht 29 zum Halten des Entsperrelements 26 in angenehmer Manipulationshöhe unlösbar angebracht, hier ebenfalls durch eine Verpressung 27 dargestellt, wobei das Gewicht 29 schwerer als der Entsperrschlüssel 26 sein muss. Zwischen Gewicht 29 und Ringhaken 28 kann eine Spiralfeder 30 um das Seil 7" gelegt sein, um die Komponenten bei festem Anreißen am Entsperrschlüssel zu schonen. Sowohl Entsperrschlüssel 26, als auch Gewicht 29, bzw. gegebenenfalls Spiralfeder 30 müssen so dimensioniert sein, dass sie sich nicht durch das Loch des Ringhakens 28 ziehen lassen. Gegebenenfalls kann eine Beilagscheibe 31 eingefügt werden.

Fig. 8a und Fig. 8b stellen den Versperrschlüssel 5 mit seiner schlüsselartigen Ausprägung 23 zum Einführen in die dafür vorgesehene Öffnung 16 im Anschlagelement K dar. Der Versperrschlüssel 5 wird fix an einem Sicherungsmittel angebracht. Die Größe des Durchmessers des Sicherungsmittels ist erfindungsgemäß variabel und lediglich durch die Öffnung des Anschlagelements K und das Gate 8 beschränkt. Auch eine Montage an anderen Sicherungsmitteln, wie Ketten, Stangen, Leitersprossen, Sicherungsringen, unlösbar mit einem Seil verbundenen Einfach- oder Mehrfachrolle sind denkbar. Der Versperrschlüssel 5 ist in den Fig. 8a bis Fig. 8c mittels zweier Kabelbinder 25 am Seil 2 montiert, denkbar sind ebenso Fixierung mittels Seilklemmen (sog. U-Bolts). Wird der Versperrvorgang nicht mechanisch, sondern mittels Identifikation durch einen Computerchip oder optische Abtastung gelöst, kann der Versperrschlüssel auch lediglich mittels eines Klebebandes (sog. Tape) befestigt sein.

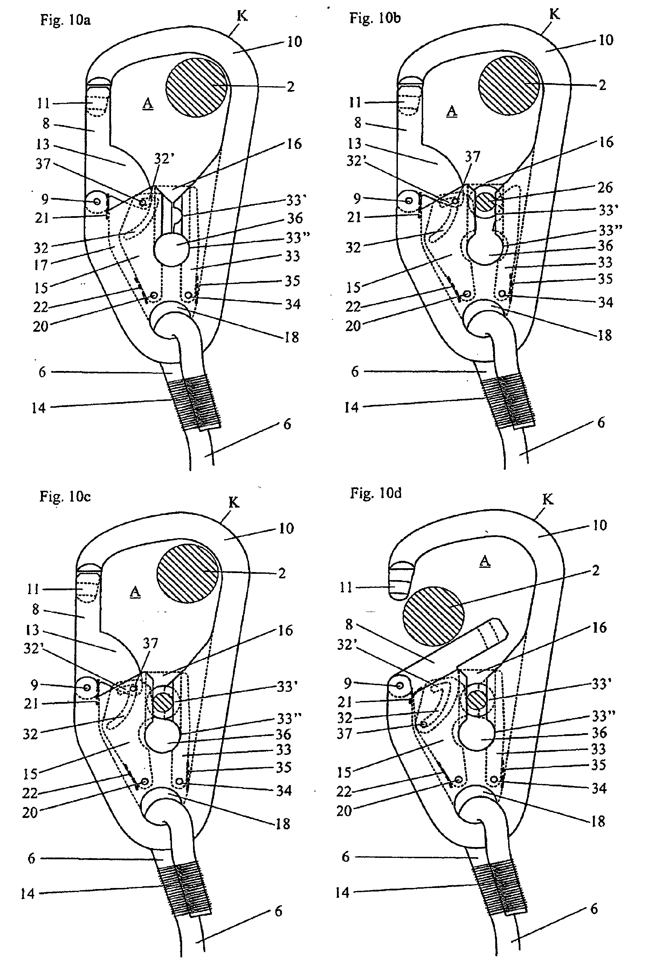

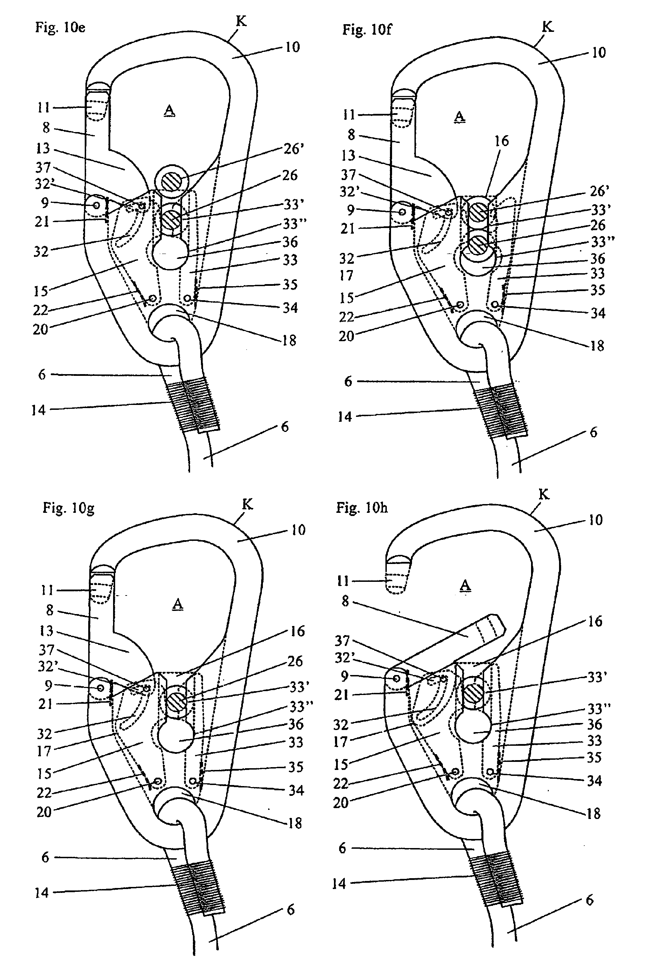

Die Fig. 10a bis Fig. 10m zeigen eine andere Variante der erfindungsgemäßen Selbstsicherungseinrichtung, bei welcher von einem Entsperrschlüssel 26 direkt zu einem weiteren Entsperrschlüssel 26' gewechselt werden kann oder das Anschlagelement K mittels des Entsperrschlüssels 26 an einem sicheren Punkt (z.B. Stahlseil, Sicherungsring, Leitersprosse, am Stahlseil unlösbar angebrachte Einzel- oder Mehrfachrolle) angebracht werden kann. Das Anschlagselement K verfügt über eine Einfuhröffnung 16, in welche sowohl die Entsperrschlüssel 26 als auch die Versperrschlüssel 5 eingeführt werden können.

Fig. 10a stellt ein in ein Stahlseil 2 versperrt eingehängtes Anschlagelement K dar. Die Blockiervorrichtung 15 blockiert die Bewegungsfreiheit des Stahlstiftes 37 (vorzugsweise vernieteter Stahlstift). Damit lässt sich das Gate 8 durch den blockierten Ausleger 13 nicht öffnen.

In Fig. 10b wird ein Entsperrschlüssel 26 in die Einfuhröffnung 16 geführt.

In Fig. 10c blockiert der Entsperrschlüssel 26 in der Ausbuchtung 33' des Einrasthebels 33. Dieser wird durch die Blattfeder 34 stets in jene Position gedrückt um gegebenenfalls diese Blockade zu ermöglichen. Der Entsperrschlüssel 26 lässt sich nun nicht mehr zerstörungsfrei aus dem Anschlagelement K entfernen. Die Person P ist nunmehr über den Entsperrschlüssel 26 gesichert. Durch den in dieser Position blockierten Entsperrschlüssel 26 wird die Blockiervorrichtung 15 in jene Position gedrängt, die dem Stahlstift 37 an der Ausbuchtung 13 des Gates 8 eine Bewegung ermöglicht.

Der Entsperrschlüssel 26 kann nun auf zwei verschiedene Varianten entfernt werden:

Fig. 10e bis Fig. 10h zeigen das Entfernen des Entsperrschlüssels 26 durch das Einführen eines weiteren Entsperrschlüssels 26', Fig. 10g bis Fig. 10m demonstrieren das Entfernen des Entsperrschlüssels 26 durch das Einführen eines Versperrschlüssels 5.

Fig. 10d zeigt das damit ermöglichte Öffnen des Gates 8 und das mögliche Entfernen des Stahlseils 2.

In Fig. 10e wird ein neuer Entsperrschlüssel 26' in die Einfuhröffnung 16 eingeführt.

In Fig. 10f ist dargestellt, wie durch das Einführen des neuen Entsperrschlüssels 26' der ursprüngliche Entsperrschlüssel 26 aus seiner Blockade gelöst wird.

In Fig. 10g wurde der ursprüngliche Entsperrschlüssel 26 bereits entfernt und der neue Entsperrschlüssel 26' ist durch den Einrasthebel 33 unlösbar mit dem Anschlagelement K verbunden.

In den Fig. 10e bis Fig. 10h lässt sich das Gate 8 öffnen, da die Sicherung der Person P ausschließlich über die Entsperrschlüssel 26 und 26' übernommen wurden. Die Entsperrschlüssel 26 und 26' sind erfindungsgemäß jeweils durch ein Verbindungsstück 7 mit einem sicheren Punkt, etwa einem Masten 3 im Hochseilgarten verbunden.

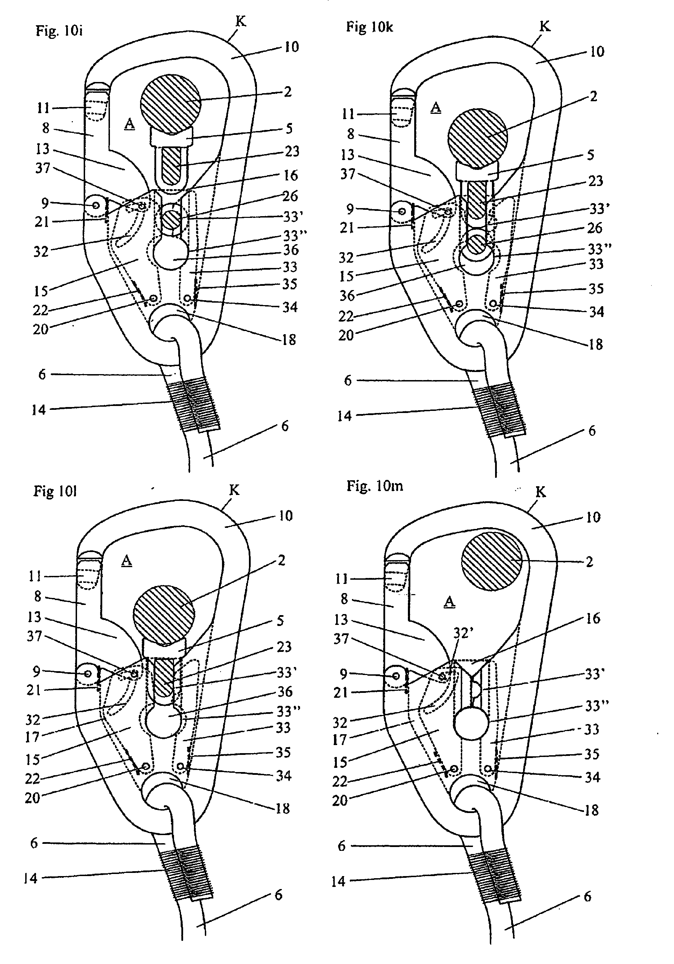

In Fig. 10i wurde das Anschlagelement K an ein sicheres Stahlseil 2 eingehängt. Ein sicheres Stahlseil 2 oder ein anderer sicherer Punkt, wie etwa ein Sicherungsring, ein anderes Seil, eine Kette, eine Leitersprosse, ein Ringhaken, ein Staple oder eine unlösbar am Seil angebrachte Einzel- oder Mehrfachrolle zeichnet sich erfindungsgemäß dadurch aus, dass ein Versperrschlüssel 5 fix montiert ist. Die Schlüsselartige Ausprägung 23 des Versperrschlüssels 5 lässt sich passend in die Einfuhröffnung 16 einführen.

In Fig. 10k ist dargestellt, wie der Versperrschlüssel 5 den Einrasthebel 33 in jene Position drückt, die den Entsperrschlüssel 26 frei gibt. Dieser wird mittels des Versperrschlüssels 5 nach unten gedrückt.

In Fig. 10l wurde der Entsperrschlüssel 26 bereits entfernt. Durch die Form des Versperrschlüssels 5, lässt sich dieser wieder durch die Einfuhröffnung 16 entfernen.

In Fig. 10m ist dargestellt, wie nunmehr die Blockiervorrichtung 15 durch die Blattfeder 22 in jene Position gedrückt wird, die das Gate 8 gegen Öffnen versperrt. Die zu sichernde Person ist nun über das Stahlseil 2 gesichert.

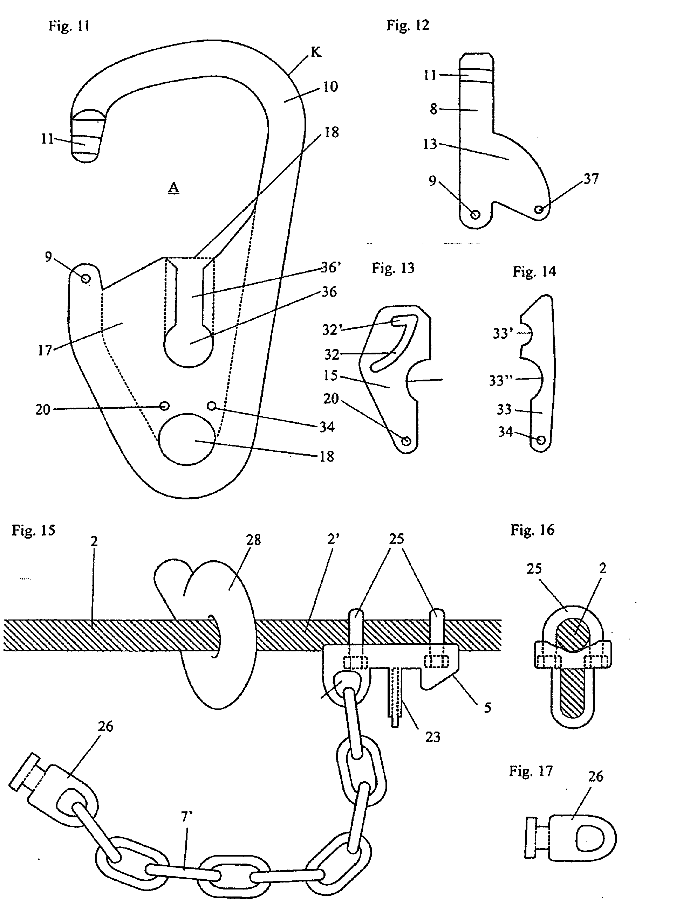

Fig. 11 stellt den Körper 10 jener Variante der Sicherungseinrichtung dar, die in den Fig. 10a bis Fig. 10m dargestellt ist. Das Anschlagelement verfügt über eine Einfuhröffnung 18, in welche sowohl der Versperrschlüssel 26 als auch der Entsperrschlüssel passend eingeführt werden kann. 36' stellt jene Position dar, in welcher ein Entsperrschlüssel 26 mittels der Ausnehmung 33' der Einrastvorrichtung 14 blockiert. 36 bezeichnet die Ausführöffnung des Entsperrschlüssels 26. Die Einrastvorrichtung 33 ist drehbar an einer Achse 34 (vorzugsweise vernieteter Metallstift oder Schraube) angebracht. Die Blockiervorrichtung 15 ist drehbar an einer Achse 20 (vorzugsweise vernieteter Metallstift oder Schraube) angebracht. Das Anschlagelement K wird mit einem Verbindungsstück 6 mit der zu sichernden Person P verbunden, welches durch das Loch 18 geführt wird und mittels eines Knotens, einer Verpressung oder einer Vernähung fixiert ist.

Fig. 12 stellt das Gate 8 des Anschlagelements dar. 9 bezeichnet die Achse des Gates (vorzugsweise vernieteter Metallstift oder Schraube). Die Ausnehmung 11 gewährleistet ein sicheres Einrasten des Gates 8 am Körper 10 des Anschlagelements K. Der Ausleger 13 des Gates 8 dient zu dessen Blockierung durch die Blockiervorrichtung 15. Dazu ist am Ausleger 13 ein Stahlstift 37 oder sonstige Ausbuchtung angebracht, welche passend in der Ausnehmung 32 der Blockiervorrichtung 15 positioniert ist. Je nach Position der Blockiervorrichtung 15 gibt diese nun das Gate 8 zum Öffnen frei bzw. blockiert es.

Fig. 15 stellt eine mögliche Kombination des Entsperrschlüssels 26 und Versperrschlüssels 5 dar. Der Versperrschlüssel 5 ist unlösbar am abgehenden Stahlseil 2' mittels zweier Seilklemmen 25 (sog. U-Bolts) fixiert. Der Entsperrschlüssels 26 ist mittels eines Verbindungsstück 7' (hier als Kette ausgeführt) mit dem Versperrschlüssel 5 verbunden. Das Verbindungsstück 7' muss durch seine Länge gewährleisten, dass der Entsperrschlüssel 26 in ein am ankommenden Stahlseil 2 entlang geführten Anschlagelement K eingeführt werden kann.

Fig. 16 stellt den Versperrschlüssel 5 dar. Die schlüssetartige Ausprägung 23 ist durch die U-artige Ausprägung so gestaltet, dass sie nicht in der Ausnehmung 33' der Einrastvorrichtung 33 einrastet. Dadurch kann ein Entsperrschlüssel 26 gelöst werden und im Anschluss der Versperrschlüssel 5 wieder durch die Einfuhröffnung 18 des Anschlagelements K entfernt werden.

Fig. 17 stellt die Seitenansicht eines Entsperrschlüssels 26 dar.

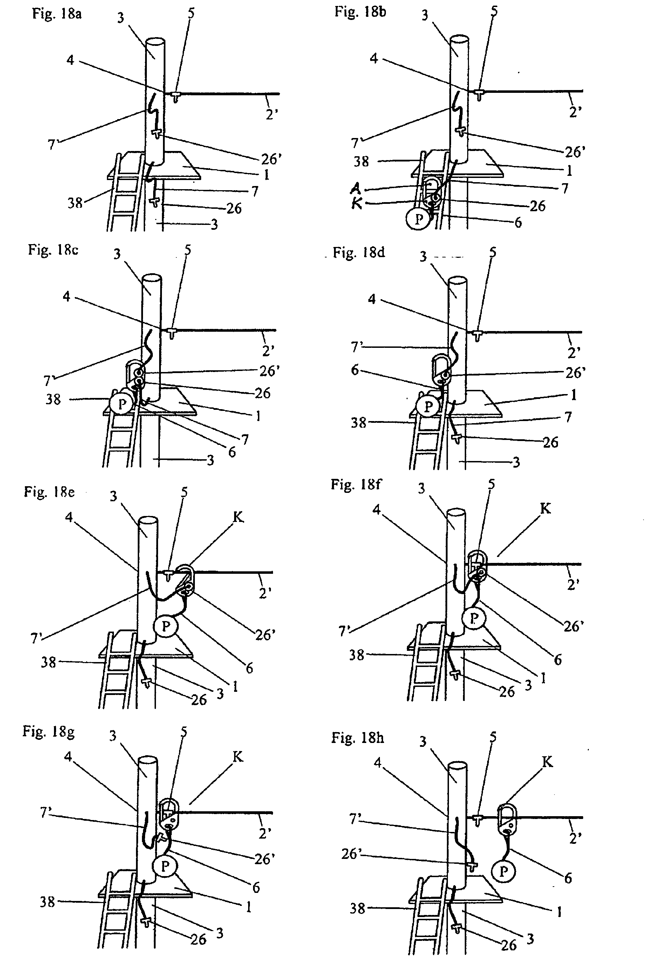

Die Fig. 18a bis Fig. 18h zeigen die Abläufe des Umhängens von einem Entsperrschlüssel 26 zu einen weiteren Entsperrschlüssel 26' und in der Folge zu einer Umsicherung auf ein Stahlseil 2'.

Fig. 18a zeigt eine typische Situation in einem Seilgarten. Dargestellt ist ein Mast 3 mit einer Plattform 1. Um die Plattform von unten zu erreichen, wird die Leiter 38 als Aufstiegshilfe verwendet. Weiters sind zwei Entsperrschlüssel 26 und 26' dargestellt, die jeweils durch ein Verbindungsstück 7 und 7' mit dem Mast 3 verbunden sind. Die Länge und Anbringung der Verbindungsstücke 7 und 7' müssen gewährleisten, dass die beiden Entsperrschlüssel 26 und 26' soweit zueinander geführt werden können, dass beide hintereinander in die Einfuhröffnung 18 des Anschlagelements K eingeführt werden können. Weiters ist ein abgehende Stahlseil 2' dargestellt, an dem ein Versperrschlüssel 5' angebracht ist.

In Fig. 18b verwendet eine zu sichernde Person P die Leiter 38 als Aufstiegshilfe. Zu diesem Zeitpunkt ist die Person P durch den Entsperrschlüssel 26 und das Verbindungsstück 7 gegen Absturz gesichert.

In Fig. 18c ist dargestellt, wie der zweite Entsperrschlüssel 26 in die Einfuhröffnung 18 des Anschlagelements eingeführt wird.

Wie in Fig. 18d dargestellt wird, hat dies zur Folge, dass der zweite Entsperrschlüssel 26' die Sicherungsfunktion übernimmt und sich der erste Entsperrschlüssel 26 aus dem Anschlagelement K löst.

In Fig. 18e wird das Anschlagelement K, dessen Gate 8 sich durch das Vorhandensein des Entsperrschlüssels 26' öffnen lässt, am Stahlseil 2' eingehängt.

In Fig. 18f wird der am Stahlseil 2 unlösbar angebrachte Versperrschlüssel 5 in die Einfuhröffnung 18 des Anschlagelements eingeführt. Dies hat zur Folge, dass das Gate 8 des Anschlagelements K gegen Öffnen versperrt wird und sich der Entsperrschlüssel 26' aus dem Anschlagelement K löst. Die Person P ist nun über das Stahlseil 2' gesichert.

In Fig. 18h kann die Person P das nächste Element des Seilgartens gesichert begehen.

### Hochseilgärten

Die erfindungsgemäße Sicherungseinrichtung ermöglicht maximale Teilnehmersicherheit auf Hochseilgärten. Dies ermöglicht dem Teilnehmer, sich voll auf die Übungen und weniger auf die Sicherheit zu fokussieren.

Das Problem der Kindersicherheit und der Sicherung von unbedarften Teilnehmern wird damit gelöst, wodurch auch die Trainer entlastet werden.

Überholen und Entgegenkommendes Passieren ist an allen Punkten mit Versperr- und Entsperrschlüsseln möglich, auf jeder Plattform können beliebig viele Übungen beginnen oder enden. Weiters bietet das System die Möglichkeit der telematischen Teilnehmersteuerung im Hochseilgarten. Durch verschiedene Gestaltung des Versperrschlüssels kann so erzielt werden, dass schwere Übungen nur für geübte Teilnehmer, leichte oder niedrige Übungen jedoch für geübte und ungeübte Teilnehmer (wie etwa Kinder) zugänglich gemacht werden können.

Vorhandene Self-Belay Hochseilgärten können mit wenig Aufwand für die Nutzung der erfindungsgemäßen Sicherungseinrichtung umgerüstet werden.

Die Anschlagelemente sind lediglich durch ein Seil oder Band mit der zu sichernden Person verbunden, auf störende Elemente, wie Kopplungseinrichtungen zwischen Anschlagelementen fallen weg.

### Klettersteige

Für Klettersteige bietet die erfindungsgemäße Sicherungseinrichtung die Möglichkeit, größere Gruppen, wie etwa Schulklassen, unter retativ wenig Aufsicht klettern zu lassen. Der Kletterer hängt sich am Anfang des Steiges ein, benutzt den Steig bis zum Ende und kann sich erst dort wieder entsichern.

Überholen und entgegenkommendes Passieren ist an allen Punkten mit Entsperr- und Versperrschlüsseln möglich. Es können ebenso Stahlseile, wie auch Seilrutschen, Leitern oder andere Aufstiegshilfen benutzt werden.

Auch ein Ausstieg und ein neuerlicher Einstieg in das System ist möglich, etwa wenn ein Klettersteig nicht durchgehend mit Stahlseilen und anderen Sicherungsmitteln ausgerüstet ist.

Vorhandene Self-Belay Klettersteige können mit wenig Aufwand für die Nutzung des durchgehend sicheren Klettersteigsets umgerüstet werden.

Klettersteige können permanent mit den erfindungsgemäßen Ent- und Versperrschlüsseln ausgestattet werden. Auch eine temporäre Nutzung ist denkbar, dabei werden vom vorangehenden Bergführer die beiden Schlüssel, im Idealfall als Kombination Fig. 6 montiert, und nach dem sicheren Passieren einer Gruppe vom zuletzt gehenden zweiten Bergführer wieder entfernt.

### Gebäudesicherung

Außenarbeiten an Gebäuden, wie etwa die Wartung von Windkraftwerken, Fensterputzern auf Wolkenkratzern, Bühnenbau, Beleuchter, Kameramänner bei Filmaufnahmen oder auch Renovierungsarbeiten werden oftmals gerüstfrei ausgeführt.

Die arbeitenden Personen werden daher mit Seilen gesichert. Neben der Haupttätigkeit, also, Renovierungen, Reparaturen oder anderen Arbeiten in der Höhe, müssen die arbeitenden Personen auch Kletter- und Sicherungstechniken beherrschen. Durch die Konzentration auf die eigentliche Tätigkeit oder durch Zeitdruck, kommt es immer wieder zur Vernachlässigung der Sicherheit und in der Folge zu Unfällen.

Die erfindungsgemäße Sicherungseinrichtung macht ein versehentliches Entsichern während der Arbeit unmöglich.

Vorhandene Bauwerke können leicht mit Ver- und Entsperrschlüsseln ausgestattet werden, bei Neubauten kann ohne großen Aufwand das System vorbereitet werden.

### Sicherung von Astronauten und Weltraumtouristen

Die erfindungsgemäße Sicherungseinrichtung kann nicht nur beim Klettern, sondern auch zur Sicherung in völlig anderen Bereichen, bis hin zur Sicherung von Astronauten außerhalb eines Raumschiffes verwendet werden.

### Sicherung auf Booten und Schiffen

Auf Booten und Schiffen ist - besonders bei schlechtem Wetter - eine Sicherung der Personen mit Gurt und Karabiner üblich. Auch hier kann die erfindungsgemäße Sicherungseinrichtung mehr Sicherheit gewährleisten.

### Weitere Anwendungsmöglichkeiten

Die erfindungsgemäße Sicherungseinrichtung eignet sich nicht nur zur Personensicherung, sie kann auch zum Sichern von Waren verwendet werden. So ist es möglich, die Bewegung eines gesicherten Produkts nur entlang eines vorgesehenen Weges, zu erlauben. Bei offenen Märkten können etwa alle diese Wege bei der Kassa enden.

Weiters kann die erfindungsgemäße Einrichtung auch eine Flucht verhindern. In diesem Fall würden anstatt des Sicherungsgurts z.B. Handschellen eingesetzt werden können, dadurch gesicherte Personen können sich lediglich entlang eines dafür vorgesehenen Weges bewegen.

### Problematik der Ablauforganisation auf Hochseilgärten

Werden bei Hochseilgärten mehrere Übungen verknüpft angeboten, so gibt es mehrere Arten der Anordnung der verschiedenen Elemente:
- Anordnung in einem Rundkurs
- Sternförmige Anordnung
- Chaotische Anordnung

Sowohl trainer- als auch teilnehmerseitig muss stets darauf geachtet werden, die Kapazitäten (Belastungsgrenzen) der Plattformen und Übungen nicht zu überschreiten. Ein häufiges Problem dabei ist die unterschiedliche Geschwindigkeit der Teilnehmer auf den verschiedenen Übungen oder ein untereinander Überholen (wollen) der Teilnehmer. Weiters kommt es häufig vor, dass Teilnehmer attraktive Übungen mehrmals begehen wollen.

Die Trainer sind daher sowohl sicherheitstechnisch als auch organisatorisch gefordert.

Selbstständige Steuerung durch das durchgehend gesicherte Selbstsicherungsset

Durch gezielte Anordnung der Schlüssel für das durchgehend gesicherte Selbstsicherungsset lässt sich die Richtung der Teilnehmer beeinflussen. In eine Übung kann immer nur auf jener Seite eingestiegen werden, auf der ein Schlüssel montiert ist.

Durch verschiedene Schlüssel können verschiedene Teilnehmer auf unterschiedlichen Wegen durch den Hochseilgarten geführt werden. So kann beispielsweise gesteuert werden, dass Kinder nur leichte Übungen in geringer Höhe begehen, gute Kletterer mit ihrem Schlüssel Zutritt zu allen Übungen erhalten.

Dasselbe gilt analog für herkömmliche Klettersteige, die auf durchgehende Sicherung durch Montage von Schlüsseln umgerüstet werden.

### Steuerung durch das durchgehend gesicherte Selbstsicherungsset mit gekennzeichneten Schlüsseln, Funkübertragung und Computer

Es besteht die Möglichkeit durch Chips oder optische Abtastung (wie auch bei EAN-Codes) den Schlüsseln 5 Informationsgehalt zu geben. Dadurch weiß der Karabiner K1 und K2, wo er sich befindet.

Stattet man nun die Karabiner mit einem Funksystem aus (z.B. Bluetooth), so können sie damit nicht nur untereinander kommunizieren, sie können die Information auch auf diesem Weg an einen Computer übertragen.

Mithilfe dieses Steuerungssystems lassen sich folgende Möglichkeiten automatisch oder durch Eingreifen eines Trainers in das Computerprogramm realisieren:
- Sperren von Übungen
- Sperren der gesamten Anlage (z.B. im Fall eines Unfalles)
- Verhindern von neuen Einstiegen und lediglich den Weg Richtung Ausgang zulassen (z.B. bei Betriebsschluss)
- Steuerung, wie viele Teilnehmer sich auf einer Übung befinden dürfen
- Steuerung, in welcher Richtung Übungen begangen werden
- Zulassen oder Verbieten von Überholmanövern
- Abrechnung nach Zeit der Benutzung
- Abrechnung nach Anzahl und Art der begangenen Übungen
- Eruierung der Gesamtbenutzungsanzahl von Übungen, um den Zeitpunkt des nächsten Services festzustellen
- Eruierung der Attraktivität der Übungen, um dies bei Änderungen des Hochseilgarten zu berücksichtigen

Die Erfindung beschränkt sich nicht auf die oben beschriebenen Ausführungsformen, sondern sie kann in verschiedener Weise modifiziert werden, z.B. können anstelle der Karabiner so genannte "FROGS" eingesetzt werden.

Weiters kann der Schlüssel auch noch folgende Formen haben:
- optisch mit Laserabtastung: Der Karabiner erkennt mittels Laserabtastung eines Codes auf einem sicheren Punkt (z.B. Stahlseil), dass er sich an einem sicheren Punkt befindet.
- Computerchip: Der Karabiner erkennt anhand eines smarten oder nicht smarten Chips auf einem sicheren Punkt (z.B. Stahlseil), dass er sich auf einem sicheren Punkt befindet.
- induktiv: Das Stahlseil wird als Eisenkern eines Induktionsvorganges genutzt. Dies hat den Vorteil, dass kein Schlüssel angebracht werden muss und das Stahlseil als Schlüssel verwendet werden kann. Eine Auslösung des Induktionsvorganges durch andere metallische Gegenstände (z.B. Schlüsselbund, Taschenmesser) ist dabei zu verhindern.
- magnetisch: Das Stahlseil dient als Eisenkern und zieht damit eine magnetische Blockiervorrichtung in seine Richtung. Diese Lösung macht die Anbringung eines Schlüssels am Stahlseil überflüssig und eignet sich dadurch auch für unpräparierte Klettersteige oder Hochseilgärten.

## Patentansprüche

1. Selbstsicherungseinrichtung mit einem Sicherungsmittel (2, 2') und einem daran einhängbaren Anschlagelement (K), das mittels eines Verbindungselements (6) mit einer zu sichernden Person (P) verbindbar ist, mit einem Entsperrelement (26) und einem Versperrelement (5), aufweisend die Kombination folgender Merkmale:
- das Anschlagelement (K) hat eine zur Aufnahme des Sicherungselements (2, 2') mittels einer Barriere (8) verschließbare Ausnehmung (A),
- die Barriere (8) ist mittels des Entsperrelements (26) unter Freigabe der Ausnehmung (A) entriegelbar
- und mittels des Versperrelements (5) unter Schließen der Ausnehmung (A) versperrbar,
- wobei das Entsperrelement (26) und das Versperrelement (5) getrennt voneinander direkt oder indirekt beim und/oder am Sicherungsmittel (2, 2') befestigt sind und
- das Entsperrelement (26) zum im am Sicherungsmittel (2, 2') eingehängten Anschlagelement (K) bewegbar sowie unter Freigabe der Ausnehmung (A) an diesem befestigbar ist und das Anschlagelement (K) mit dem an ihm befestigten Entsperrelement (26) nur im am Sicherungsmittel (2, 2') eingehängten Zustand zum Versperrelement (5) bewegbar ist,
- wobei mit dem Versperrvorgang die Befestigung des Entsperrelements (26) am Anschlagelement (K) lösbar ist.

2. Selbstsicherungseinrichtung nach Anspruch 1, wobei das zum Anschlagelement (K) bringbare Entsperrelement (26) mit dem Sicherungsmittel (2, 2') direkt oder indirekt über ein flexibles Verbindungsstück (7) verbunden ist, das mit einer vorbestimmten Last, vorzugsweise mit einer Last schwerer als die zu sichernde Person, belastbar ist.

3. Selbstsicherungseinrichtung nach Anspruch 1 oder 2, wobei zwei oder mehrere Anschlagelemente (K1, K2) vorgesehen sind, wobei jedes Anschlagelement (K1, K2) jeweils eine zur Aufnahme des Sicherungsmittels (2, 2') mittels einer Barriere (8) verschließbare Ausnehmung (A) aufweist und jede Barriere (8) mittels eines Entsperrelements (26) entriegelbar und mittels eines Versperrelements (5) versperrbar ist.

4. Selbstsicherungseinrichtung nach einem der Ansprüche 1 bis 3, mit zwei oder mehreren Sicherungsmittel (2, 2'), wobei die Sicherungsmittel (2, 2') jeweils mit mindestens einem Entsperrelement (26) und mit mindestens einem Versperrelement (5) ausgestattet sind.

5. Selbstsicherungseinrichtung nach einem der Ansprüche 1 bis 4, wobei das Anschlagelement (K) im am Entsperrelement (26) befestigten Zustand zu einem weiteren Entsperrelement (26') verbringbar ist und dieses weitere Entsperrelement (26') am Anschlagelement (K) unter Freigabe des ersten Entsperrelements (26) befestigbar ist.

6. Selbstsicherungseinrichtung nach einem der Ansprüche 1 bis 5, wobei das Versperrelement (5) und das Entsperrelement (26) gemeinsam an einem am Sicherungsmittel (2, 2') befestigbaren Montagestück vorgesehen sind.

7. Selbstsicherungseinrichtung nach einem der Ansprüche 2 bis 6, wobei das Entsperrelement (26) direkt oder indirekt am bzw. beim Sicherungsmittel (2, 2') befestigende flexible Verbindungsstück (7) mit einem Dämpferelement (30), wie mit einem Federelement (30), ausgestattet ist.

8. Selbstsicherungseinrichtung nach einem der Ansprüche 1 bis 7, wobei ein das Versperrelement (5) tragendes Montagestück an das Sicherungsmittel (2, 2') klemmbar ist, vorzugsweise mittels Seilklemmen oder Kabelbinder (25, 25').

9. Selbstsicherungseinrichtung nach einem der Ansprüche 2 bis 7, wobei das Verbindungsstück (7) des Entsperrelements (26) durch eine ortsfest vorgesehene Öse geführt und über einen Gewichtsausgleich mittels eines Gewichtes (29) in Manipulationshöhe gehalten ist.

## Claims

1. Belaying device with securing means (2, 2') and a fastening component (K) mountable thereon, which is connectable to a person to be belayed (P) by means of a connecting element (6) and with an unlocking component (26) and a locking component (5), comprising the combination of the following characteristics:
- the fastening component (K) has a recess (A) lockable to receive the securing means (2, 2') by means of a bar (8),
- the bar is unlockable by means of an unlocking component (26) while releasing the recess (A),
- and is lockable by means of a locking component (5) while closing the recess (A),
- wherein the unlocking component (26) and the locking component (5) are directly or indirectly attached, separately from one another, next to and/or onto the securing means (2, 2') and
- the unlocking component (26) is movable to the fastening component (K) mounted on the securing means (2, 2') and, while the recess (A) is released, attachable to this and the fastening component (K) with the unlocking component (26) attached thereto is movable to the locking component (5) only when the fastening component is mounted on the securing means (2, 2'),
- wherein the attaching of the unlocking component (26) on the fastening component (K) is releasable using the locking procedure.

2. Belaying device in accordance with Claim 1, wherein the unlocking component (26) that can be brought to the fastening component (K) is directly or indirectly connected to the securing means (2, 2') by means of a flexible connecting piece (7), which can withstand a predetermined load, preferably a heavier load than the person to be belayed.

3. Belaying device in accordance with Claim 1 or 2, wherein two or more fastening components (K1, K2) are provided, wherein each fastening component (K1, K2) comprises each a recess (A) for the admission of the securing means (2, 2'), closable by means of a bar (8), and that each bar (8) is unlockable by means of an unlocking component (26) and lockable by means of a locking component (5).

4. Belaying device in accordance with one of the Claims 1 to 3 with two or more securing means (2, 2'), wherein the securing means (2, 2') are each equipped with at least one unlocking component (26) and with at least one locking component (5).

5. Belaying device in accordance with one of the Claims 1 to 4, wherein the fastening component (K), when attached to the unlocking component (26), can be brought to another unlocking component (26') and this other unlocking component (26') is attachable to the fastening component (K) while the first unlocking component (26) is released.

6. Belaying device in accordance with one of the Claims 1 to 5, wherein the locking component (5) and the unlocking component (26) are arranged together on an assembly mountable on the securing means (2, 2').

7. Belaying device in accordance with one of the Claims 2 to 6, wherein the flexible connecting piece (7) attaching the unlocking component (26) directly or indirectly on or next to the securing means (2, 2') is equipped with an damper component (30), such as a spring component (30).

8. Belaying device in accordance with one of the Claims 1 to 7, wherein an assembly supporting the locking component (5) is clampable on the securing means (2, 2'), preferably by means of cable clamps or cable ties (25, 25').

9. Belaying device in accordance with one of the Claims 2 to 7, wherein the connecting piece (7) of the unlocking component (26) is guided through a fixed loop, and is kept, via counterbalancing by means of a weight (29), at a manipulation height.

## Revendications

1. Système de blocage automatique avec un moyen de blocage (2, 2') et un élément de butée (K) pouvant être suspendu à celui-ci qui peut être relié à l'aide d'un élément de liaison (6) à une personne à bloquer (P), avec un élément de déverrouillage (26) et un élément de verrouillage (5), présentant la combinaison des caractéristiques suivantes :
- l'élément de butée (K) possède un évidement (A) pouvant être fermé pour la réception de l'élément de blocage (2, 2') à l'aide d'une barrière (8),
- la barrière (8) peut être déverrouillée à l'aide de l'élément de déverrouillage (26) en libérant l'évidement (A)
- et peut être verrouillée à l'aide de l'élément de verrouillage (5) en fermant l'évidement (A),
- dans lequel l'élément de déverrouillage (26) et l'élément de verrouillage (5) sont fixés de manière séparée directement ou indirectement près et/ou sur le moyen de blocage (2, 2') et
- l'élément de déverrouillage (26) peut être déplacé vers l'élément de butée (K) suspendu au moyen de blocage (2, 2') et peut être fixé en libérant l'évidement (A) à celui-ci et l'élément de butée (K) ne peut être déplacé avec l'élément de déverrouillage (26) fixé sur lui-même qu'à l'état suspendu au moyen de blocage (2, 2') vers l'élément de verrouillage (5),
- dans lequel le processus de verrouillage permet de détacher la fixation de l'élément de déverrouillage (26) à l'élément de butée (K).

2. Système de blocage automatique selon la revendication 1, dans lequel l'élément de déverrouillage (26) pouvant être amené vers l'élément de butée (K) est relié au moyen de blocage (2, 2') directement ou indirectement par une pièce de liaison flexible (7) qui peut être chargée avec une charge prédéterminée, de préférence avec une charge plus lourde que la personne à bloquer.

3. Système de blocage automatique selon la revendication 1 ou 2, dans lequel deux ou plusieurs éléments de butée (K1, K2) sont prévus, sachant que chaque élément de butée (K1, K2) présente respectivement un évidement (A) pouvant être fermé pour la réception du moyen de blocage (2, 2') à l'aide d'une barrière (8) et chaque barrière (8) peut être déverrouillée à l'aide d'un élément de déverrouillage (26) et verrouillée à l'aide d'un élément de verrouillage (5).

4. Système de blocage automatique selon l'une quelconque des revendications 1 à 3, avec deux ou plusieurs moyens de blocage (2, 2'), dans lequel les moyens de blocage (2, 2') sont respectivement équipés d'au moins un élément de déverrouillage (26) et d'au moins un élément de verrouillage (5).

5. Système de blocage automatique selon l'une quelconque des revendications 1 à 4, dans lequel l'élément de butée (K) peut passer à l'état fixé sur l'élément de déverrouillage (26), à un autre élément de déverrouillage (26') et cet autre élément de déverrouillage (26') peut être fixé sur l'élément de butée (K) en libérant le premier élément de déverrouillage (26).

6. Système de blocage automatique selon l'une quelconque des revendications 1 à 5, dans lequel l'élément de verrouillage (5) et l'élément de déverrouillage (26) sont prévus ensemble sur une pièce de montage pouvant être fixée sur le moyen de blocage (2, 2').

7. Système de blocage automatique selon l'une quelconque des revendications 2 à 6, dans lequel la pièce de liaison (7) flexible fixant l'élément de déverrouillage (26) directement ou indirectement sur ou près du moyen de blocage (2, 2') est équipée d'un élément d'amortissement (30) tout comme d'un élément de ressort (30).

8. Système de blocage automatique selon l'une quelconque des revendications 1 à 7, dans lequel une pièce de montage portant l'élément de verrouillage (5) peut être serrée sur le moyen de blocage (2, 2'), de préférence à l'aide de pince-câbles ou colliers de serrage (25, 25').

9. Système de blocage automatique selon l'une quelconque des revendications 2 à 7, dans lequel la pièce de liaison (7) de l'élément de déverrouillage (26) est guidée par un oeillet prévu fixement et est maintenue à hauteur de manipulation par un équilibrage de poids à l'aide d'un poids (29).
